(19) Europäisches Patentamt
European Patent Office
Office européen des brevets

(11) EP 0 977 206 B1

(12) EUROPEAN PATENT SPECIFICATION

(45) Date of publication and mention of the grant of the patent: **16.07.2003 Bulletin 2003/29**

(21) Application number: **97925333.3**

(22) Date of filing: **18.02.1997**

(51) Int Cl.[7]: **G21C 7/10**, G21C 7/24, G21C 7/103

(86) International application number: **PCT/RU97/00035**

(87) International publication number: **WO 98/036422 (20.08.1998 Gazette 1998/33)**

# (54) CONTROL ROD IN A WATER-COOLED NUCLEAR REACTOR

REGELSTAB IN EINEM WASSERGEKÜHLTEN KERNREAKTOR

BARRE DE REGLAGE D'UN REACTEUR NUCLEAIRE REFROIDI A L'EAU

(84) Designated Contracting States: **DE FR**

(43) Date of publication of application: **02.02.2000 Bulletin 2000/05**

(73) Proprietor: **Gosudarstvennoe Predpriyatie Moskovsky Zavod Polimetallov Moscow, 115409 (RU)**

(72) Inventors:
- **CHERNYSHOV, Vladimir Mikhailovich Moscow, 115304 (RU)**
- **RYAKHOVSKIKH, Viktor Ivanovich Moscow, 115574 (RU)**
- **POSLAVSKY, Alexandr Olegovich Moscow, 115582 (RU)**
- **PONOMARENKO, Viktor Borisovich Moscow, 115409 (RU)**
- **MAKOVSKY, Vladimir Danilovich Moscow, 115522 (RU)**
- **OSADCHY, Alexandr Ivanovich Moscow, 123585 (RU)**
- **LUNIN, Gleb Leonidovich Moscow, 123479 (RU)**
- **VASILCHENKO, Ivan Nikitovich Moskovskaya obl. Podolsk, 142100 (RU)**

(74) Representative: **Gerbino, Angelo et al Jacobacci & Partners S.p.A. Corso Regio Parco, 27 10152 Torino (IT)**

(56) References cited:
**FR-A- 1 574 399** **US-A- 4 451 428**
**US-A- 4 699 756**

- **DATABASE WPI Section Ch, Week 199835 Derwent Publications Ltd., London, GB; Class K05, AN 1998-412248 XP002127643 & RU 2 101 788 C (MOSC POLYMETALS WKS ENTERP), 10 January 1998 (1998-01-10)**
- **DATABASE WPI Section Ch, Week 198525 Derwent Publications Ltd., London, GB; Class K05, AN 1985-151035 XP002127644 & JP 60 085390 A (HITACHI LTD), 14 May 1985 (1985-05-14)**
- **DATABASE WPI Section Ch, Week 198740 Derwent Publications Ltd., London, GB; Class K05, AN 1987-280513 XP002127645 & JP 62 194497 A (NIPPON KAKU NENRYO), 26 August 1987 (1987-08-26)**
- **PONOMARENKO V.B. et al., Organy Regulirovanya i SVP Yadernykh Reaktorov VVER-1000 i Puti Ikh Usovershenstvovanya Voprosy Atomnoi Hauki i Tekhniki. Ser. Fizika Radiatsionnykh Povrezhdenny i Radiasionnoe Material-Ovedenie, 1994, Vyn. 2/62, 3/63, pages 95-112.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 977 206 B1

Printed by Jouve, 75001 PARIS (FR)

## Description

### Field of the Invention

The present invention relates to the nuclear technology, especially to facilities in the control and protective system (CPS) of water-cooled nuclear reactors, and can be used in control mechanisms realized in the form of single rods having various cross-section or integrated to assemblies including a set of control rods or a set of fuel and control rods, designed to compensate for excess reactivity, to control reactivity in the process of power operation, especially as safety rods, as well as when used in control systems with combined functions.

### Background of the Invention

To provide proper and secure operation of a nuclear reactor, a required reactivity level should be maintained during reactor start-up, arrest, transitional processes, with reactivity being sharply reduced during reactor shutdown. For this purpose, the reactor is equipped with control rods of various design, which are connected to a driving mechanism for displacing the rods along the height of the core to vary reactivity within a required range.

A specific feature of water-cooled reactors is that, due to a sufficiently long operation of nuclear fuel without recharging and to high fuel rating, they have a comparatively high excess reactivity accounted for fuel burnup. Further, such reactors exhibit considerable temperature and power effects. Taken together, these factors ultimately result in that the core of a water-cooled vessel reactor, at the start of campaign, may contain up to several tens of critical masses, for compensation of which a considerable combined efficiency of all CPS mechanisms is required, thereby posing a problem of accommodation of the mechanical control system.

In modern water-cooled reactors, in particular, VVER-1000, reactivity margin for fuel burnup is compensated for by boric acid dissolved in a primary system coolant, the boric acid being gradually withdrawn with burnup of fuel charges. As this takes place, the operating group of control mechanisms (approximately 10% of the total number) is in a semi-inserted state. The remaining control mechanisms (about 90% of their total number) are taken out from the core and stay in the emergency protection mode (EPM). In this mode, a lower part of absorbing elements is actually in the top reflector zone and vigorously burns up. This feature of employment of absorbing elements in water-cooled reactors causes a substantial irregularity of absorber burnup in control mechanisms along their length, depending on the position relative to the core.

For this reason, in designing and improving the absorbing elements for this type of reactor, great emphasis is placed on selection of neutron-absorbing materials and compositions. Especially as in reactor operation, a part of control mechanisms is with time elevated from the core, the other part of the control mechanisms changes its function, and the control mechanisms suspended above the core may be introduced therein by various reasons. Therefore, in designing control rods, account must be taken of their characteristics under different conditions of reactor operation, specifically, to also provide a required absorption capacity profile when the rod operates in the emergency protection mode.

A required absorption capacity profile along the rod length can be provided by various designs. For instance, the use may be made of pellets made of a material with a lower neutron-absorbing capacity, such as zirconium dioxide, placed in the rod lower part between boron carbide pellets. (See US Patent No.4624827, Int.Cl. G21 C 7/10, 1986).

The required reduction in absorption capacity in the lower part of the rod can be provided by reduction in the pellet diameter from the top down with simultaneous decrease in concentration of absorbing material, boron carbide. (See FR Application No.2570214, Int.Cl. G21C 7/10, 1986).

Described in US Patent No.4062725, Int.Cl. G21C 7/10, 1977) is a rod including three sections, wherein the upper section has the greatest absorption cross-section and is made of boron carbide, the lower section accommodates an absorber material with a lower absorption cross-section than that in the upper section, a middle section disposed between them being of a material which does not essentially absorb neutrons. This design also realizes a predetermined absorption capacity along the rod.

All of the designs mentioned above assume the use, in the upper rod part, of boron carbide or a material including boron-10, which are excellent neutron absorbers, as this is important when the rod operates in the emergency protection mode. However, when absorbing neutrons in $(n,\alpha)$ reaction, boron carbide swells and intensively gasses, thereby reducing life of control mechanisms and requiring design and process improvements in the rods.

Location of silver alloy (Ag-In-Cd) having $(n,\gamma)$ reaction with neutrons in the rod lower part, inserted first into the core, ensures essential reduction in swelling and gassing of boron carbide owing to a shielding effect upon boron carbide by withdrawal of the same from areas with high neutron fluxes when the rod is disposed, in operation, in the core upper part or above the same (see US Patent No.4699756, G21C 7/10, 1985).

However, in the radiation process during the reactor campaign, the efficiency of neutron absorption by the silver alloy changes, leading to variation in its shielding effect upon boron carbide and, as a consequence, to alteration

in characteristics of the rod during its operation, in particular, to variation in the combined physical weight of the rod.

Further, the efficiency of neutron absorption by Ag-In-Cd alloy varies by a nonlinear law as a function of flux, practically eliminating the possibility of exact calculation of efficiency of the rod as a whole by the time of residence in different areas of the core and above the same. This hampers forecasting the rod life and designing the rod displacing systems (monitoring devices, driving mechanisms, etc.) since two parts of the rod irregularly burn up in unpredictable manner.

Most closely approaching the present invention is a control rod of a water-cooled vessel reactor, comprising a cladding, in which a stack of neutron absorber material is located, said stack being comprised of two parts along length L, one of the parts including a material having (n,$\alpha$) reaction with neutrons, while the other part, inserted first into the core, includes a dysprosium-based material (see V.M.Chernyshov, V.I.Ryakhovskikh et al., Improved Absorption Rods. Reactor VVER-1000. Report at VVER Fuel Reliability and Flexibility, Czechia, Rzhezh, June 17-22, 1996).

The selection of dysprosium compounds ($Dy_2O_3 \cdot TiO_2$, $Dy_2O_3 \cdot TiO_7$, $Dy_2O_3 \cdot HfO_2$), as a material having (n,$\gamma$) reaction with neutrons, provides stability of rod parameters since the aforementioned dysprosium compounds, first, cause only a slight change in the neutron absorption efficiency in the radiation process, second, the law of changing neutron absorption efficiency is of a pronounced linear nature. A reasonably reliable shielding of boron carbide against swelling is provided when the part occupied by the dysprosium-based material has a length no less than 2% of the entire length of the neutron absorber stack.

Further, availability of a dysprosium-based material in the part of the stack substantially increases the combined rod weight since a density of dysprosium is more than four times that of boron carbide. The increase in the rod weight raises the velocity of the rod insertion into the core by gravity drop in the emergency protection mode, thereby improving the reactor safety.

However, the considerable length of the neutron absorber stack part occupied by the dysprosium-based material, which in the prior apparatus occupies more than 20% of the total stack length, impairs the efficiency of the rod as a whole, since this essentially decreases the quantity of boron carbide possessing a greater, as compared to dysprosium, absorption capacity, resulting in detrimental effect on the control mechanism characteristics.

## SUMMARY OF THE INVENTION

It is an object of the present invention to provide a control mechanism having an increased physical weight and, at the same time, a reasonable efficiency (absorption capacity).

The technical result of the present invention is the increase in the velocity of the control mechanism drop in the emergency protection mode at required neutron absorption characteristics.

The object of the invention is accomplished in a control rod of a water-cooled vessel reactor, comprising a cladding having a neutron absorber stack disposed within the cladding, said stack being comprised of two parts along length L, one of the parts including a material having (n,$\alpha$) reaction with neutrons, while the other part, inserted first into a core, includes a dysprosium-based material, wherein length 1 of the part of the neutron absorber stack including a dysprosium-based material is selected by the expression:

$$\frac{l}{L} \le \left(\frac{l}{L}\right)_{max} = \left(\frac{l}{L}\right)_0 \left(1 + \frac{E_{ad}}{E_0}\right) \qquad (1)$$

where

$$\left(\frac{l}{L}\right)_{max}:$$

is a maximum possible value of l/L ratio, providing a required efficiency,

$$\left(\frac{l}{L}\right)_0;$$

is a calculated value at which efficiency of the control rod is equal to a minimum required efficiency ($E_0$) of a rod of length L, which is homogeneous along the length and completely filled with an absorber having (n,$\alpha$) reaction with neutrons,

$E_{ad}$ is an additional efficiency to provide a minimum required combined efficiency along a control mechanism length at increased length of an absorber having (n,$\gamma$) reaction with neutrons.

Further, the material having (n,$\alpha$) reaction with neutrons is boron carbide, while the material having (n,$\gamma$) reaction with neutrons is dysprosium monotitanate ($Dy_2O_3 \cdot TiO_2$), and/or dysprosium dititanate ($Dy_2O_3 \cdot TiO_7$), and/or dysprosium hafnate ($Dy_2O_3 \cdot HfO_2$).

Boron carbide and the dysprosium-based material may be utilized in the form of powder and/or pellets.

When in the form of powder, boron carbide preferably has grains from 5 to 160µm in size, the powder being consolidated by vibration to a density no less than 1.7g/cm$^3$.

When in the form of powder, the dysprosium-based material has grains from 5 to 315µm in size, a density of dysprosium monotitanate or dititanate, upon consolidation by vibration, being from 4.9 to 7.0g/cm$^3$.

Powdered dysprosium hafnate is consolidated by vibration to a density of 7 or 9.0g/ cm$^3$.

A distinctive feature of the present invention is that length I of the part of the neutron absorber stack including a dysprosium-based material is selected by a particular relationship which is restricted by a maximum possible value of the combined weight of the rod and takes account of a required efficiency (absorption capacity) of the rod. Increase in length I of the part of the neutron absorption stack made of a dysprosium-based material, resulting in increased combined weight of the rod, and, hence, in increased velocity of it insertion (drop) into the core, is possible only to such a value at which l/R ratio does not exceed a maximum (threshold) value. A maximum l/L ratio value, on one hand, is restricted by a calculated value of l/R ratio at which the efficiency of the control mechanism is equal to a minimum required efficiency ($E_0$) of a rod of length L, which is homogeneous along the length and completely filled with an absorber having (n,$\alpha$) reaction with neutrons, and, on the other hand, can be increased by the provision of an additional efficiency ($E_{ad}$). to provide a minimum required total efficiency along a control mechanism length at increased length of an absorber having (n,$\gamma$) reaction with neutrons. The additional efficiency can be provided, for example, by increasing the total number of control mechanisms, by enhancing absorption capacity of the rod parts, as well as by any conventional means.

The aforementioned advantages and features of the present invention will become apparent upon a reading of the following detailed description of the preferable embodiment of the invention.

Brief Description of the Drawings

Fig. 1 shows a general view of a control rod of a water-cooled vessel reactor;
Fig.2 shows an embodiment of a control rod, in which a material having (n,$\alpha$) reaction with neutrons (boron carbide) is in the form of pellets, while a dysprosium-based material is in the form of a powder consolidated by vibration;
Fig.3 shows an embodiment of the design in which a material having (n,$\alpha$) reaction with neutrons (boron carbide) is in the form of a powder consolidated by vibration, while a dysprosium-based material is in the form of pellets; and
Fig.4 shows an embodiment in which the entire neutron absorber stack is formed from different materials in the form of pellets.

Detailed Description of Preferred Embodiment

Referring now to the drawings, there is shown a control rod 1 of a nuclear reactor, including a cladding 2, in which a neutron absorber stack 3 of length L is located. One part 4 of the stack 3 includes a material having (n,$\alpha$) reaction with neutrons, such as boron carbide. The other part 5 of length 1, which is inserted first into a core (not shown), comprises a material, such as a dysprosium-based compound, having (n,$\gamma$) reaction with neutrons. Height 1 of the part 5 is no less than 2% of height L of the stack 3. The cladding is sealed, e.g. by welding, using a lower end 6 and an upper end 7.

A cavity 8 can be provided between the upper end 7 and the stack 3 to collect gases and accommodate retainers 9 of the stack 3. Since at radiation of the part 4 of the stack 3 by neutrons, gas emission from boron carbide is neglectful due to the presence of the part 5 occupied by dysprosium, a rod weighting member 10 may be placed into the cavity 8. The parts 4 and 5 of the stack 3 may be filled with powder 11 consolidated by vibration or assembled from pellets 12.

The control mechanism in accordance with the invention operates in the following manner. Depending on operation conditions and a required power level to be maintained, the rod 1 may be located in different positions relative to the core. When the rod is positioned above the core or partially inserted into the core, the part 4 of the neutron

absorber stack does not have a considerable irregularity of burnup and is little subjected to detrimental impact of neutrons, causing its swelling and gas emission therefrom, which is provided by provision of the part 5 comprising dysprosium.

On arrival of an emergency protection signal, the rod 1 is fully inserted into the core by gravity drop which is promoted by the weighting member 10. However, the increase in the rod weight due to the weighting member 10 is restricted by dimensions of the space available for its accommodation. Further, the increase in the rod weight is feasible by increasing length l of the rod part 5 filled with the dysprosium-based material having a greater density than that of boron carbide. Increase in length l and, respectively, in l/L ratio, results in an increased total weight of the rod, and hence, in increased velocity of the rod drop into the core. The maximum value of length l is, however, restricted by a combined rod efficiency value. Therefore, a further increase in l value, reducing the total efficiency of the rod, must be compensated for by methods and means which improve the composite rod efficiency in terms of its use in control mechanisms of a nuclear reactor. Therefore, in designing and constructing a new rod, at a given velocity of the rod drop provided by a given time of the rod insertion into the core, account must be taken of the change in its efficiency (absorption capacity) which may be compensated for by a number of rods, their diameter and by other conventional means and methods. In any case, a control rod of a vessel reactor, comprising two parts, of which one part, inserted first into the core, is made a dysprosium-based material, and the second part is made of boron carbide, should not have length 1 of the part 5 at which l/L ratio exceeds a maximum possible value of this parameter determined by the expression (1).

The rod elements can be fabricated by any conventional method. The rod can be used independently and have an individual displacement drive. A set of rods can be assembled to a cluster with a common driving mechanism. The rods can be mounted in the fuel assembly instead of fuel elements. Different use of the rods is also accomplished in a conventional manner.

Industrial Applicability

A control rod of a water-cooled nuclear reactor in accordance with the invention exhibits improved stability of parameters owing to combination of absorbing elements at a maximum possible weight which has a beneficial affect on reactor reactivity and may be employed in acting nuclear reactors and in newly constructed ones. The invention takes account of the change in absorption capacity of the rod as a whole, resulting from the increase in the specific share of a dysprosium-based material in the total length of the neutron absorber stack.

## Claims

**1.** A control rod of a water-cooled nuclear reactor, comprising a cladding having a neutron absorber stack disposed within the cladding, said neutron absorber being comprised of two parts along length L, one of the parts including a material having (n,$\alpha$) reaction with neutrons, while the other part, inserted first into the core, includes a dysprosium-based material, wherein length l of the part of the neutron absorber stack made of a dysprosium-based material is selected by the expression:

$$\frac{l}{L} \leq \left(\frac{l}{L}\right)_{max} = \left(\frac{l}{L}\right)_0 \left(1 + \frac{E_{od}}{E_0}\right)$$

where

$$\left(\frac{l}{L}\right)_{max}$$

is a maximum possible value of 1/L ratio, providing a required efficiency,

$$\left(\frac{l}{L}\right)_0 \text{;}$$

is a calculated value at which efficiency of a control mechanism is equal to a minimum required efficiency ($E_0$) of a rod of length L which is homogeneous along the length and completely filled with an absorber having (n,$\alpha$) reaction with neutrons,

$E_{ad}$ is an additional efficiency to provide a minimum required combined efficiency along a control mechanism length at increased length of an absorber having (n,$\gamma$) reaction with neutrons.

**2.** A control rod for a water-cooled vessel reactor as set forth in claim 1, wherein the material having (n,$\alpha$) reaction with neutrons is boron carbide.

**3.** A control rod for a water-cooled vessel reactor as set forth in claim 2, wherein boron carbide is in the form of a powder with grains from 5 to 160$\mu$m in size, the powder being consolidated by vibration to a density no less that 1.7g/cm$^3$.

**4.** A control rod for a water-cooled vessel reactor as set forth in claim 1, or 2, or 3, wherein the material having (n,$\gamma$) reaction with neutrons is dysprosium monotitanate ($Dy_2O_3 \cdot TiO_2$), and/or dysprosium dititanate ($Dy_2O_3 \cdot TiO_7$), and/or dysprosium hafnate ($Dy_2O_3 \cdot HfO_2$).

**5.** A control rod for a water-cooled vessel reactor as set forth in claim 4, wherein dysprosium monotitanate or dysprosium dititanate is in the form of a powder with grains from 5 to 315$\mu$m in size, said powder being consolidated by vibration to a density from 4.9 to 7.0 g/cm$^3$.

**6.** A control rod for a water-cooled vessel reactor as set forth in claim 4 or 5, wherein dysprosium hafnate is in the form of a powder with grains from 5 to 315$\mu$m in size.

**7.** A control rod for a water-cooled vessel reactor as set forth in claim 6, wherein dysprosium hafnate is consolidated by vibration to a density of 7.0 g/cm$^3$.

**8.** A control rod for a water-cooled vessel reactor as set forth in claim 6, wherein dysprosium hafnate is consolidated by vibration to a density of 9.0 g/cm$^3$.

**9.** A control rod for a water-cooled vessel reactor as set forth in claim 1, or 2, or 4, wherein the material having (n,$\alpha$) reaction with neutrons and/or the dysprosium-based material is in the form of pellets.

**Patentansprüche**

**1.** Regelstab eines wassergekühlten Kernreaktors, umfassend eine Hülse, die einen in der Hülse angeordneten Neutronenabsorberstapel aufweist, wobei der Neutronenabsorber aus zwei Teilen entlang der Länge L aufgebaut ist, wobei einer der Teile ein Material enthält, das eine (n, $\alpha$) Reaktion mit Neutronen aufweist, während der andere Teil, der zuerst in den Kern eingesetzt wird, ein auf Dysprosium basierendes Material enthält, wobei die Länge l des Teils des Neutronenabsorberstapels, der aus auf Dysprosium basierenden Material hergestellt ist, ausgewählt ist durch den Ausdruck:

$$\frac{l}{L} \leq \left(\frac{l}{L}\right)_{max} = \left(\frac{l}{L}\right)_0 \left(1 + \frac{E_{ad}}{E_0}\right)$$

wobei

$$\left(\frac{l}{L}\right)_{max}$$

ein maximal möglicher Wert des I/L-Verhältnisses ist, der für eine erforderliche Effizienz sorgt, wobei

$$\left(\frac{l}{L}\right)_{0}$$

ein berechneter Wert ist, bei dem die Effizienz eines Regelmechanismus gleich einer minimal erforderlichen Effizienz ($E_0$) eines Stabes der Länge L ist, der entlang der Länge homogen und vollständig mit einem Absorber gefüllt ist, der eine (n, $\alpha$) Reaktion mit Neutronen aufweist,

wobei $E_{ad}$ eine zusätzliche Effizienz ist, um für eine minimal erforderliche kombinierte Effizienz entlang einer Regelmechanismuslänge bei einer vergrößerten Länge eines Absorbers, der eine (n, $\gamma$) Reaktion mit Neutronen aufweist, zu sorgen.

**2.** Regelstab für einen Reaktor mit wassergekühltem Behälter nach Anspruch 1, worin das Material, das eine (n, $\alpha$) Reaktion mit Neutronen aufweist, Borcarbid ist.

**3.** Regelstab für einen Reaktor mit wassergekühltem Behälter nach Anspruch 2, worin das Borcarbid in der Form eines Pulvers mit einer Korngröße von 5 bis 160 $\mu$m vorliegt, wobei das Pulver durch Vibration auf eine Dichte von nicht weniger als 1,7 g/cm$^3$ konsolidiert ist.

**4.** Regelstab für einen Reaktor mit wassergekühltem Behälter nach Anspruch 1 oder 2 oder 3, wobei das Material, das eine (n, $\gamma$) Reaktion mit Neutronen aufweist, Dysprosiummonititanat ($Dy_2O_3 \cdot TiO_2$) und/oder Dysprosiumdititanat ($Dy_2O_3 \cdot TiO_7$) und/oder Dysprosiumhafanat ($Dy_2O_3 \cdot HfO_2$) ist.

**5.** Regelstab für einen Reaktor mit wassergekühltem Behälter nach Anspruch 4, worin das Dysprosiummonotitanat oder Dysprosiumdititanat in der Form eines Pulvers mit einer Korngröße von 5 bis 315 $\mu$m vorliegt, wobei das Pulver durch Vibration auf eine Dichte von 4,9 bis 7,0 g/cm$^3$ konsolidiert ist.

**6.** Regelstab für einen Reaktor mit wassergekühltem Behälter nach Anspruch 4 oder 5, worin das Dysprosiumhafanat in der Form eines Pulvers mit einer Korngröße von 5 bis 315 $\mu$m vorliegt.

**7.** Regelstab für einen Reaktor mit wassergekühltem Behälter nach Anspruch 6, worin das Dysprosiumhafanat durch Vibration auf eine Dichte von 7,0 g/cm$^3$ konsolidiert ist.

**8.** Regelstab für einen Reaktor mit wassergekühltem Behälter nach Anspruch 6, worin das Dysprosiumhafanat durch Vibration auf eine Dichte von 9,0 g/cm$^3$ konsolidiert ist.

**9.** Regelstab für einen Reaktor mit wassergekühltem Behälter nach Anspruch 1 oder 2 oder 4, worin das Material, das eine (n, $\alpha$) Reaktion mit Neutronen aufweist, und/oder das auf Dysprosium basierende Material in der Form von Pellets vorliegt.

## Revendications

**1.** Barre de commande d'un réacteur nucléaire refroidi à l'eau, comprenant une gaine dotée d'un empilement absorbeur de neutrons disposé à l'intérieur de la gaine, ledit absorbeur de neutrons comprenant deux parties le long de la longueur L, l'une des parties incluant un matériau ayant une réaction (n,$\alpha$) avec les neutrons, tandis que l'autre partie, insérée d'abord dans le coeur, inclut un matériau à base de dysprosium, dans lequel la longueur 1 de la partie de l'empilement absorbeur de neutrons en matériau à base de dysprosium est choisie par l'expression :

$$\frac{l}{L} \leq \left(\frac{l}{L}\right)_{max} = \left(\frac{l}{L}\right)_0 \left(1 + \frac{E_{ad}}{E_0}\right)$$

$$\text{ù} \left(\frac{l}{L}\right)_{max}$$

est une valeur possible maximum du rapport $l$/L, fournissant un rendement requis,

$$\left(\frac{l}{L}\right)_0$$

est une valeur calculée à laquelle le rendement d'un mécanisme de commande est égal à un rendement requis minimum ($E_0$) d'une barre de longueur L, homogène sur la longueur et remplie complètement d'un absorbeur ayant une réaction (n,$\alpha$) avec les neutrons,

$E_{ad}$ est un rendement supplémentaire pour fournir un rendement combiné requis minimum le long d'une longueur du mécanisme de commande à longueur accrue d'un absorbeur ayant une réaction (n,$\gamma$) avec les neutrons.

**2.** Barre de commande d'un réacteur nucléaire refroidi à l'eau selon la revendication 1, dans laquelle le matériau ayant une réaction (n,$\alpha$) avec les neutrons est du carbure de bore.

**3.** Barre de commande d'un réacteur nucléaire refroidi à l'eau selon la revendication 2, dans laquelle le carbure de bore est sous forme de poudre avec des grains dont la taille va de 5 à 160 $\mu$m, la poudre étant consolidée par vibration jusqu'à une densité au moins égale à 1,7 g/cm$^3$.

**4.** Barre de commande d'un réacteur nucléaire refroidi à l'eau selon la revendication 1, ou 2, ou 3, dans laquelle le matériau ayant une réaction (n,$\gamma$) avec les neutrons est du monotitanate de dysprosium ($Dy_2O_3.TiO_2$), et/ou du dititanate de dysprosium ($Dy_2O_3.TiO_7$), et/ou de l'hafnate de dysprosium ($Dy_2O_3.HfO_2$).

**5.** Barre de commande d'un réacteur nucléaire refroidi à l'eau selon la revendication 4, dans laquelle le monotitanate de dysprosium ou le dititanate de dysprosium est sous forme de poudre avec des grains dont la taille va de 5 à 315 $\mu$m, ladite poudre étant consolidée par vibration jusqu'à une densité allant de 4,9 à 7,0 g/cm$^3$.

**6.** Barre de commande d'un réacteur nucléaire refroidi à l'eau selon la revendication 4 ou 5, dans laquelle l'hafnate de dysprosium est sous forme de poudre avec des grains dont la taille va de 5 à 315 $\mu$m.

**7.** Barre de commande d'un réacteur nucléaire refroidi à l'eau selon la revendication 6, dans laquelle l'hafnate de dysprosium est consolidé par vibration, jusqu'à une densité de 7,0 g/cm$^3$.

**8.** Barre de commande d'un réacteur nucléaire refroidi à l'eau selon la revendication 6, dans laquelle l'hafnate de dysprosium est consolidé par vibration, jusqu'à une densité de 9,0 g/cm$^3$.

**9.** Barre de commande d'un réacteur nucléaire refroidi à l'eau selon la revendication 1, ou 2 ou 4, dans laquelle le matériau ayant une réaction (n,$\alpha$) avec les neutrons et/ou le matériau à base de dysprosium est sous forme de pastilles.

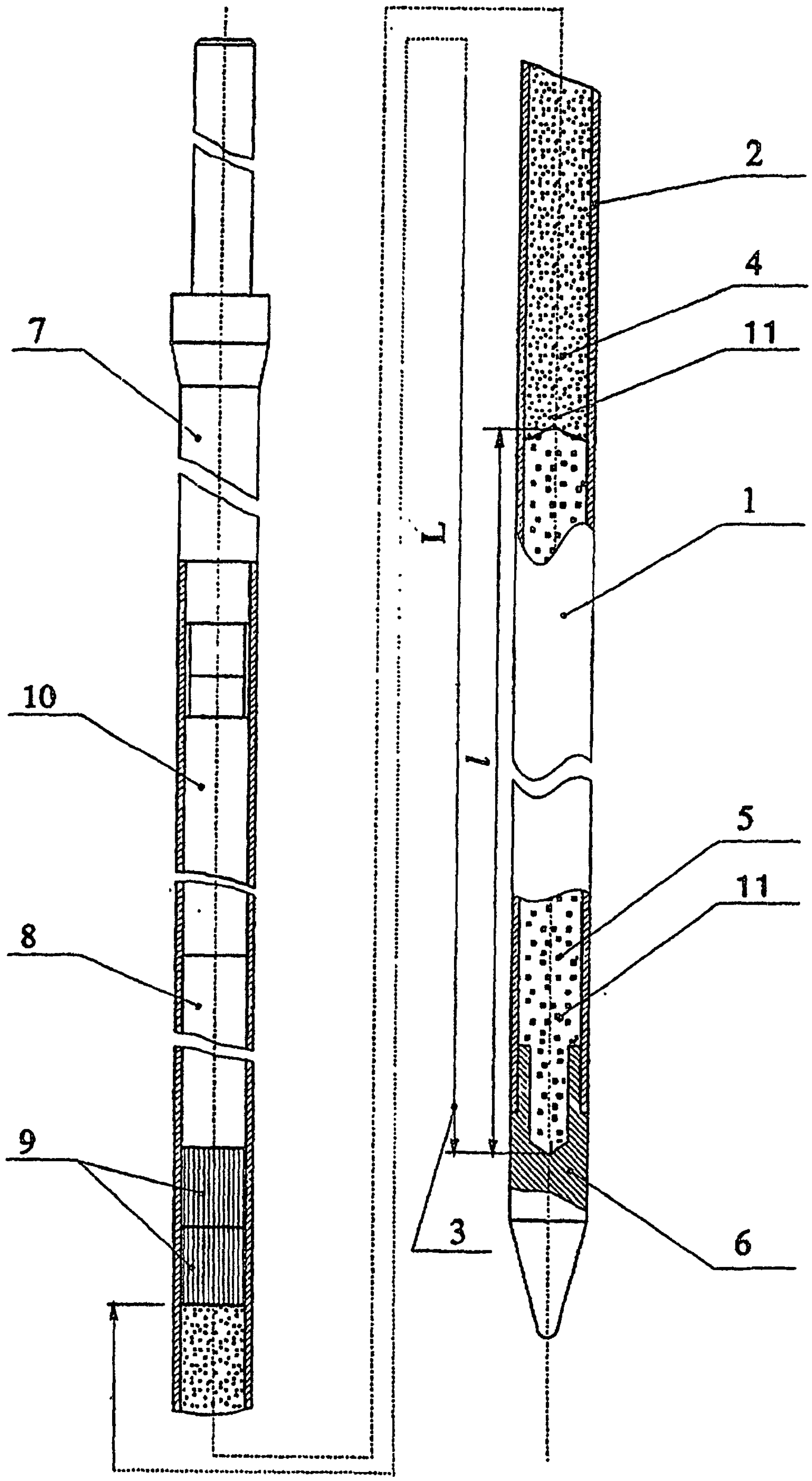


FIG. 1

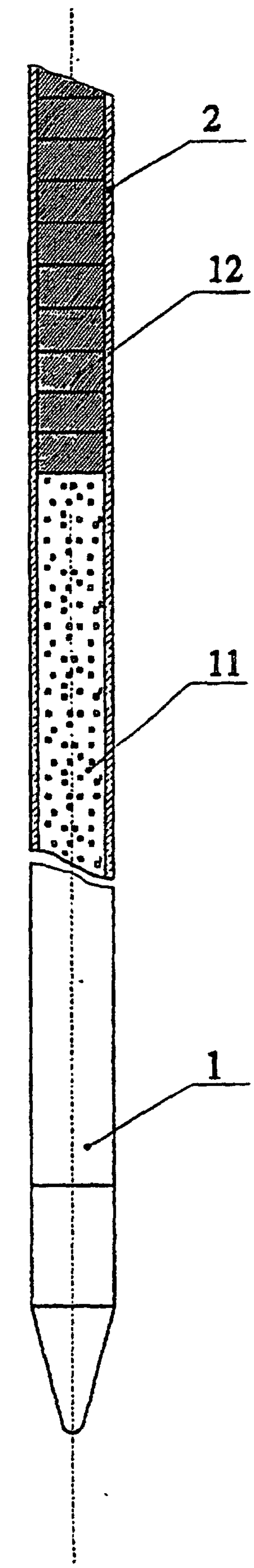


FIG. 2

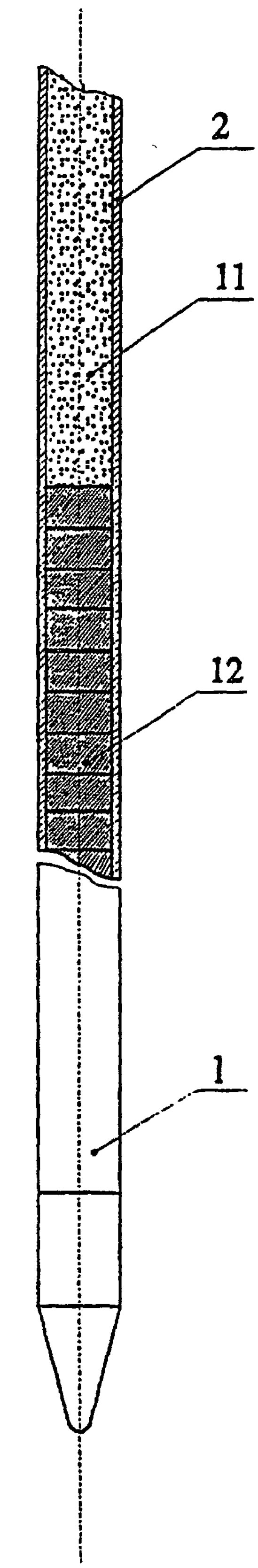


FIG. 3

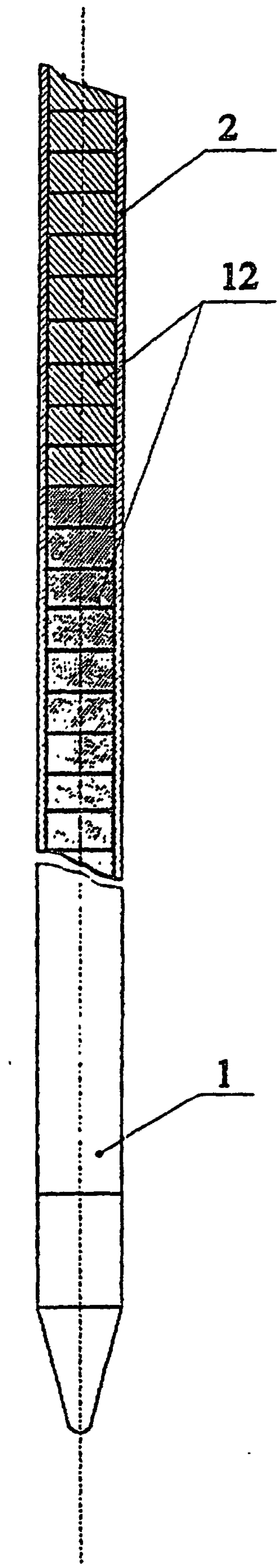


FIG. 4